# EUROPÄISCHE PATENTSCHRIFT

(11) **EP 0 941 198 B1**
(45) Veröffentlichungstag und Bekanntmachung des Hinweises auf die Patenterteilung: **02.04.2003**
(21) Anmeldenummer: 97913077.0
(22) Anmeldetag: 01.12.1997
(51) Int. Cl.: B62K 5/04, B62D 61/08

(54) **MOTORBETRIEBENES DREIRAD-FAHRZEUG**
THREE-WHEEL MOTOR VEHICLE
VEHICULE A MOTEUR A TROIS ROUES

(30) Priorität: 06.12.1996 CH 298696
(43) Veröffentlichungstag der Anmeldung: 15.09.1999
(73) Patentinhaber: Citymobil AG, 6020 Emmenbrücke (CH)
(72) Erfinder: AREGGER, Kurt, CH-6020 Emmenbrücke (CH)
(74) Vertreter: Felber, Josef
(86) Internationale Anmeldenummer: CH9700452
(87) Internationale Veröffentlichungsnummer: WO98024681

(56) Entgegenhaltungen:
- EP-A- 0 529 188
- FR-A- 1 562 248
- GB-A- 2 014 094
- GB-A- 2 074 957
- US-A- 3 605 929
- US-A- 3 938 609
- US-A- 4 159 752

## Beschreibung

Die vorliegende Erfindung betrifft ein motorbetriebenes Dreirad-Fahrzeug zum Transport von wenigstens einer Person sowie zusätzlich von Material. Der innerstädtische Verkehr leidet weltweit am Problem von notorischen Staus infolge von Verkehrsüberlastung sowie am Platzproblem für das Abstellen der Fahrzeuge. Da der Individualverkehr für den Benützer der bequemste ist und gleichzeitig das Transportieren von Sachen erlaubt, ist er bei weitem der populärste. Er wird von vielen Menschen gegenüber kollektiven Verkehrsträgern wie Bahn, Strassenbahn und Bus bevorzugt, selbst wenn sie hierzu viel Zeit in Staus und mit der Parkplatzsuche verbringen müssen. Eine gewisse Entlastung der Verkehrssituation bei einem bestehenden Strassennetz bringen Kompaktautos für den innerstädtischen Verkehr, wie sie von verschiedenen Autoherstellern entwickelt und zum Teil schon lanciert werden. Auf einem herkömmlichen Parkfeld können zwei derartige Kompaktfahrzeuge abgestellt werden, womit eine Verdoppelung der Parkplatz-Kapazität erreicht würde, wenn nur noch solche Kompaktfahrzeuge verkehren würden. Eine weitere Alternative als Verkehrsmittel für den Individualverkehr bieten die Zweirad-Fahrzeuge, angefangen vom Fahrrad über die Fahrräder mit Hilfsmotor, Motorfahrräder, Mopeds, Roller bis hin zu den schweren Motorrädern. Alle diese Zweiräder, welche viel weniger breit als zweispurige Fahrzeuge sind und zudem sehr viel weniger Parkraum beanspruchen, eignen sich aber kaum für den Schlechtwetterbetrieb. Bei Regen wird der Fahrer unweigerlich mehr oder weniger durchnässt und bei starker Kälte ist das Benützen von Zweirädern unangenehm und für die Gesundheit nicht unbedenklich. Auf Schnee ist das Fahren ausserdem recht gefährlich. Um sich vor der Witterung besser zu schützen und auch um im Falle eines Sturzes besser geschützt zu sein, trägt der Zweiradfahrer oft spezielle Kleidung und der Motorradfahrer ausserdem einen Sturzhelm. Nun ist aber das Umkleiden und das Helmtragen nicht gerade bequem. Wer täglich zur Arbeit fährt, muss sich zum Beispiel am Arbeitsplatz umziehen, das heisst das Lederkombi ausziehen und erst dann zum Beispiel den Anzug anziehen. Damen handeln sich mit dem Helmtragen Probleme mit ihrer Frisur ein und ein elegantes Deux-Pièce oder ein Jupe lässt sich nicht unter einem Lederkombi tragen. Also ist vor und nach jeder Fahrt das Umziehen angesagt. Es ist klar, dass sich deshalb motorisierte Zweiräder kaum für jedermann für die Fahrt zum Einkauf, zum Konzert oder auch nur zum gewöhnlichen abendlichen Ausgang für ein Nachtessen im Restaurant eignen. Auch das Mittransportieren von Sachen ist auf Zweirädern nur beschränkt möglich. Um diesen Problemen entgegenzuwirken wurden schon verschiedene Stadtmobile in Form von Dreirädern oder vierrädrigen Kleinstfahrzeugen lanciert, welche eine Kabine oder eine richtige Karosserie aufweisen. Oftmals sind diese Fahrzeuge von einem batteriebetriebenen Elektromotor angetrieben. Sie sind damit leise und im Betrieb emmissionsfrei. Der Nachteil besteht jedoch in der oft mangelhaften Leistung sowie im beschränkten Aktionsradius. Ausserdem fehlt oftmals eine Heizung für den Winterbetrieb. Früher waren motorbetriebene Kabinenroller für ein bis zwei Personen populär. Diese hatten jedoch eine ähnliche Spurbreite wie ein Kleinauto, waren mit einem Heckmotor und Heckantrieb ausgerüstet und verfügten deshalb nur über wenig Stauraum.

Aus der US-A-3 605 929 ist ein motorbetriebenes Dreiradfahrzeug bekanntgeworden, das aus zwei um seine Längsachse verschwenkbaren Teilen besteht, wobei der Hinterteil ein Fahrgestell für zweispurig angeordnete Räder aufweist und der Vorderteil den Fahrerseitz und ein gelenktes Vorderrad trägt, welches von einem Motor angetrieben ist. Dieses Fahrzeug ist als Golf-Cart konzipiert und daher bloss für geringe Fahrgeschwindigkeiten ausgelegt. Sein Fahrgestell ist ungefedert und eine Karosserie für den Wetterschutz fehlt gänzlich. Dieser Golf-Cart ist deshalb nicht für den Strassenverkehr geeignet.

Es ist bisher kein Dreirad-Fahrzeug mit zueinander verschwenkbarem Vorder- und Hinterteil bekanntgeworden, das einen Vorderradantrieb aufweist und sich für den Strassenverkehr mit seinen üblichen Geschwindigkeiten eignet und über eine geschlossene Kabine zur Gewährleistung der Allwettertauglichkeit verfügt. Von grosser Bedeutung für die Realisierung eines solchen Strassenfahrzeuges erweist sich die Vorderradaufhängung zur Federung und spurtreuen Führung des Fahrzeuges, wobei diese im Falle eines Vorderradantriebes gleichzeitig den Motor und das Getriebe zu tragen hat.

Die vorliegende Erfindung stellt sich zur Aufgabe, ein strassenverkehrstaugliches, motorbetriebenes Dreirad-Fahrzeug mit Vorderradantrieb und zueinander verschwenkbarem Vorder- und Hinterteil zu schaffen, welches einen Beitrag zur Entlastung der innerstädtischen Verkehrssituation und der Parkplatznot leisten soll. Dieses Fortbewegungsmittel soll mindestens eine Person möglichst sparsam bezüglich Anschaffungs- und Betriebskosten transportieren können. Es soll ausserdem platzsparend in Länge und Breite sein, einfach und bequem bedienbar sein, und eine hohe Wendigkeit aufweisen. Zudem soll es hinreichende Fahrleistungen haben, damit ein Mithalten mit dem konventionellen Autoverkehr problemlos möglich ist, und ausserdem soll auch sein Aktionsradius einen Einsatz im Ueberlandverkehr erlauben, wie mit einem Auto oder Motorrad. In einer besonderen Ausführung soll es ausserdem allwettertauglich sein und insbesondere auch eine Heizung für den Winterbetrieb aufweisen. Das Fahrzeug soll in dieser Version weiter einen wettergeschützten und diebstahlsicheren Stauraum zum Transportieren von Sachen aufweisen, der wenigstens für den regelmässigen Einkauf einer vierköpfigen Familie ausreicht.

Diese Aufgabe wird gelöst von einem motorbetriebenen Dreirad-Fahrzeug nach dem Patentanspruch 1.

In den Zeichnungen ist ein Ausführungsbeispiel dieses Dreirad-Fahrzeuges in verschiedenen Ansichten gezeigt und anhand der nachfolgenden Beschreibung werden sein Aufbau und seine einzelnen Teile und deren Funktion erläutert.

### Es zeigt:

- Figur 1:: Das motorbetriebene Dreirad-Fahrzeug von der Seite her gesehen in einer schematischen Ansicht, ohne Karosserie;
- Figur 2:: Das motorbetriebene Dreirad-Fahrzeug gemäss Figur 1 im Grundriss in einer schematischen Ansicht, ohne Karosserie;
- Figur 3: Das motorbetriebene Dreirad-Fahrzeug von der Seite her gesehen in einer schematischen Ansicht, ohne Karosserie und mit einer alternativen Vorderradaufhängung;
- Figur 4:: Das motorbetriebene Dreirad-Fahrzeug gemäss Figur 3 im Grundriss in einer schematischen Ansicht, ohne Karosserie und bei eingeschlagenem Vorderrad;
- Figur 5:: Das motorbetriebene Dreirad-Fahrzeug mit Karosserie und geschlossener Fahrerkabine von der Seite her gesehen;
- Figur 6:: Das motorbetriebene Dreirad-Fahrzeug in der Schwenklage einer Rechtskurve von schräg vorne her gesehen;
- Figur 7:: Das motorbetriebene Dreirad-Fahrzeug in der Schwenklage einer Linkskurve von schräg hinten gesehen;
- Figur 8:: Das motorbetriebene Dreirad-Fahrzeug mit Karosserie von vorne her gesehen;
- Figur 9:: Das motorbetriebene Dreirad-Fahrzeug mit Karosserie von hinten her gesehen;
- Figur 10:: Das motorbetriebene Dreirad-Fahrzeug von hinten her gesehen bei Durchfahrt einer Rechtskurve, mit der Stabilisatoreinrichtung;
- Figur 11:: Das motorbetriebene Dreirad-Fahrzeug von hinten her gesehen, beim Anhalten auf einer schiefen Ebene, mit der Stabilisatoreinrichtung in Aktion;
- Figur 12:: Das motorbetriebene Dreirad-Fahrzeug mit Karosserie in perspektivischer Ansicht beim Durchfahren einer Linkskurve.

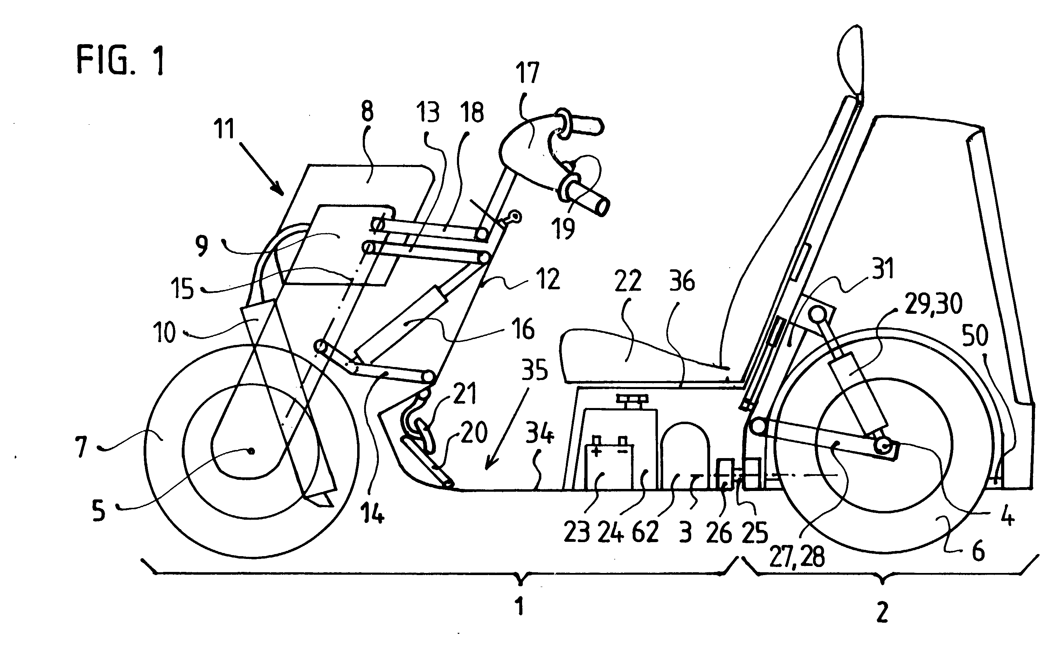

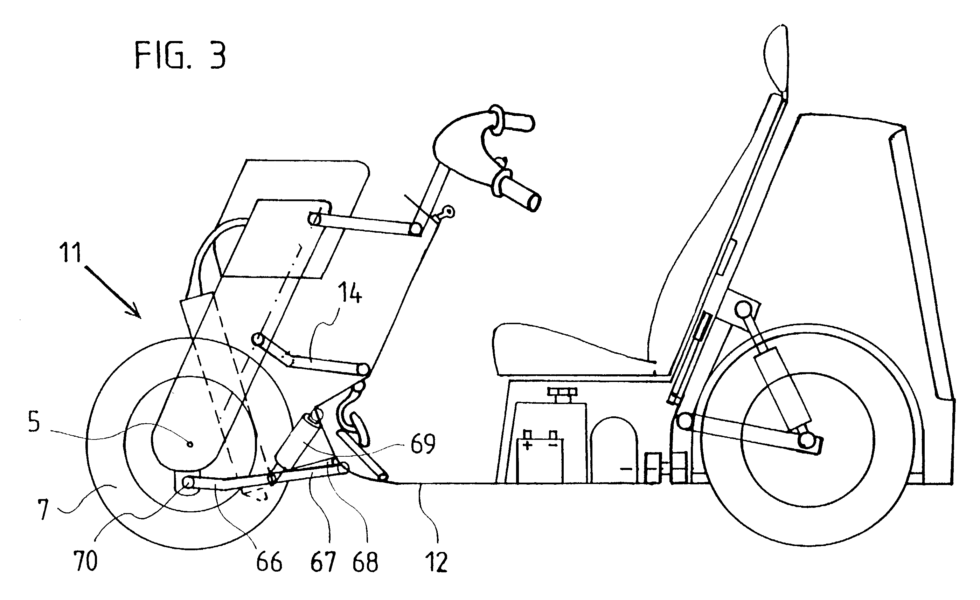

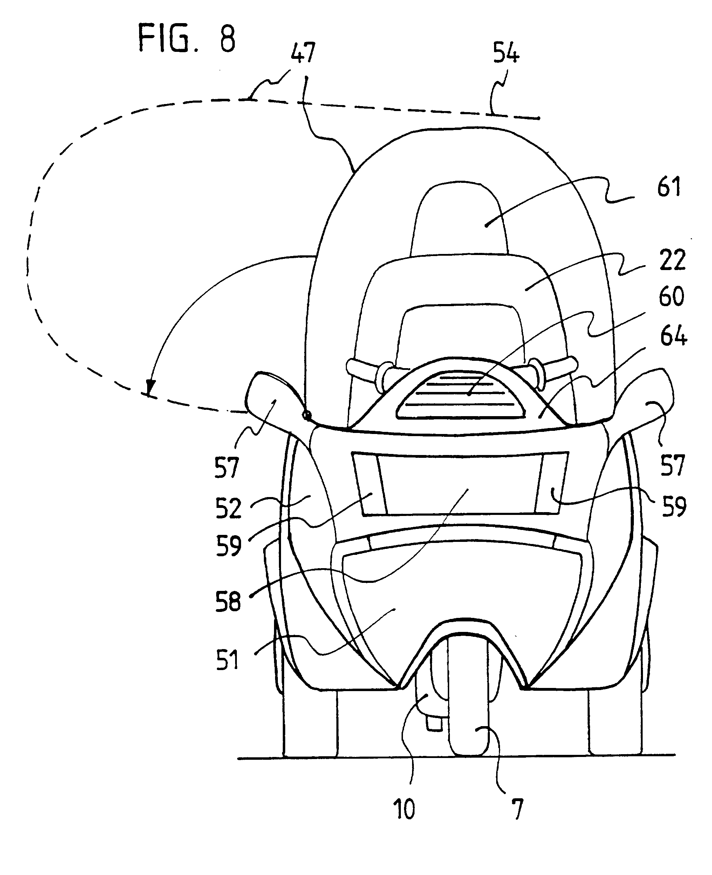

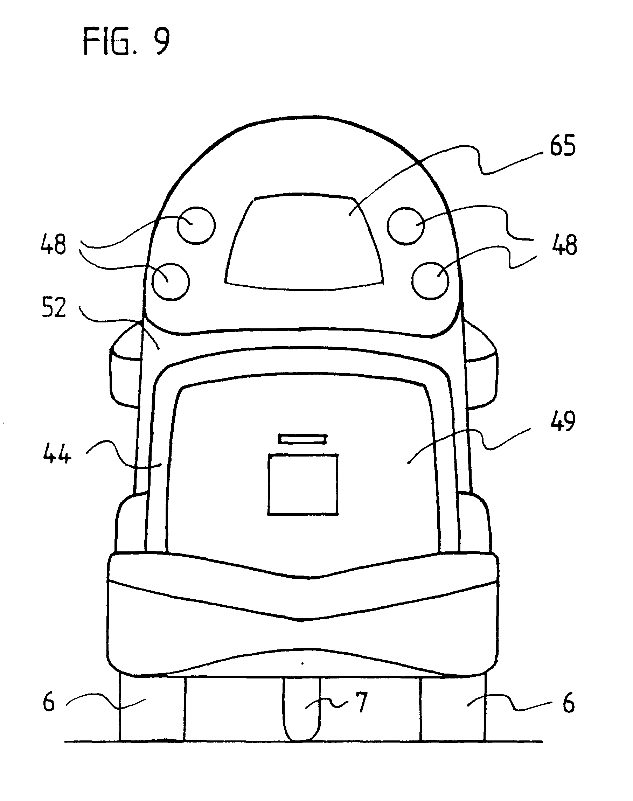

In Figur 1 ist das motorbetriebene Dreirad-Fahrzeug von der Seite her gesehen schematisiert dargestellt, und zwar ohne Karosserie, damit der Blick freigegeben ist auf die technischen Merkmale, welche das Fahrzeug wesentlich charakterisieren. Das Fahrzeug besteht grundsätzlich aus einem vorderen 1 und einem hinteren Fahrzeugteil 2, wobei diese beiden Teile 1,2 um die Fahrzeuglängsachse zueinander verschwenkbar sind. Die Schwenkachse 3 verläuft also längs des Fahrzeuges und ist möglichst weit unten angeordnet, jedenfalls unterhalb des Niveaus der Radachsen 4,5. Beim Vorderrad 7 handelt es sich um ein solches, wie es sonst an Motorrollern eingesetzt wird, während die Hinterräder 6 Autoräder sind, welche also eine breite, zylindrische Lauffläche aufweisen. Diese Räder 6 bestehen zum Beispiel aus einer gegossenen 13-Zoll-Radfelge und einem darauf aufgezogenen Autoreifen der Dimension 155/60. Es können aber auch Räder anderer Dimension gewählt werden, insbesondere auch kleinere Räder, sodass ein damit ausgerüstetes Fahrzeug handlich und die Räder sowie deren Verschalungen gemessen am gesamten Fahrzeugvolumen wenig Platz in Anspruch nehmen. Eine Besonderheit an diesem Fahrzeug ist es nun, dass der vordere Fahrzeugteil 1 vorne eine schwenkbare Vorderradaufhängung 11 aufweist, an welcher nebst dem Vorderrad 7 auch der Motor 8 mit Getriebe 9 befestigt ist und das Fahrzeug somit einen Vorderradantrieb aufweist. Der Motor 8 und das Getriebe 9 bilden im Prinzip eine Baueinheit, wobei das Getriebegehäuse direkt das Vorderrad 7 trägt. Der Motor 8, das Getriebe 9 und insbesondere auch der Auspuff 10 sind also ungefedert und werden möglichst leicht und kompakt gebaut, um diese ungefederten Massen gering zu halten. Der Auspuff 10 ist seitlich montiert und seine Mündung ist in Bodennähe angeordnet, sodass die Abgase in Fahrt unterhalb des Fahrzeuges durchstreichen und dieses nicht verschmutzen und keine Gase in den Fahrerraum eindringen. Die ganze Baueinheit aus Motor 8 mit Auspuff 10, Getriebe 9 und Rad 7 ist über eine Aufhängung 11 schwenkbar mit dem Rahmenteil 12 des vorderen Fahrzeugteils 1 verbunden. Der vordere Fahrzeugteil 1 besteht entweder aus einem Rahmen in Form eines Chassis, auf dem ein Fahrerraum als Karosserie aufgebaut ist, oder er besteht aus einer selbsttragenden Karosserie in Monocock-Bauweise, vorzugsweise aus einem faserverstärkten Polyester, Kevlar oder sonst einem Kunststoff. Aber auch Blech bietet sich als Baumaterial für die Karosserie an. Die Aufhängung 11 besteht im gezeigten Beispiel aus zwei etwa parallel zueinander angeordneten Dreieckslenkern 13,14. Der obere Dreieckslenker 13 besteht aus zwei Lenkerstangen 13, die aufwärts und abwärts schwenkbar am Rahmenteil 12 des vorderen Fahrzeugteiles 1 oder an der selbsttragenden Karosserie befestigt sind. Die beiden Lenkerstangen 13 laufen in Fahrtrichtung gegeneinander zu und sind an einer gemeinsamen Achse 15 ebenfalls auf- und abschwenkbar angelenkt. Die unteren Lenkerstangen 14 sind in gleicher Weise mit dem Rahmen 12 oder der Karosserie und der Achse 15 verbunden. Sie sind so gekrümmt, dass damit sichergestellt ist, dass bei einem Frontalaufprall diese Lenkerstangen 14 an einer vorbestimmten Stelle geknickt werden und somit nicht wie Bolzen in die Fahrerkabine eindringen können. Der Rahmen 12 ist an der Stelle, wo die Dreieckslenker 13 angelenkt sind, mit dem vorderen Bereich der unteren Dreieckslenker 14 über ein in Fahrtrichtung schräg nach unten verlaufendes Federbein mit Stossdämpfer 16 verbunden. Der vordere Rahmenteil des Fahrzeuges wird daher von diesem Federbein mit Stossdämpfer 16 abgestützt. Die Baueinheit aus Motor 8, Getriebe 9 und Vorderrad 7 kann seitlich um die in Fahrtrichtung schräg abwärts verlaufende Achse 15 geschwenkt werden. Diese Achse 15 verläuft hinter der vorderen Radachse 5 schräg nach unten, wodurch das Fahrzeug die gewünschte Eigenlenkstabilität erhält. In einer weiterentwickelten Version kann die Lenkachse 15 direkt in der selbsttragenden Karosserie oder dem vorderen Rahmenteil eingegossen sein. Zur Lenkung des Fahrzeuges dient ein konventioneller Zweiradlenker 17, der über ein Lenkgestänge 18 mit der Baueinheit aus Motor 8, Getriebe 9 und Vorderrad 7 verbunden ist. Nebst einer hohen Eigenlenkstabilität ist die ganze Lenkgeometrie so ausgelegt, dass die Lenkkräfte in allen Fahrsituationen gering bleiben, damit auch zierliche Personen keine Mühe haben, das Fahrzeug sicher und mühelos zu lenken. Der vordere Fahrzeugteil 1 beinhaltet auch den eigentlichen Fahrerraum. Dieser weist einen Boden 34 auf, welcher so ausgeformt ist, dass er einen Fussraum 35 sowie eine Fläche 36 zur Aufnahme des Fahrersitzes 22 bildet. Dieser Boden 34 kann als Teil einer selbsttragenden Karosserie ausgebildet sein und entsprechend aus Blech oder einem Verbund-Werkstoff hergestellt sein. Der Motor 8 wird im Prinzip über bloss zwei Bedienungselemente bedient, nämlich einerseits über einen Zündschlüssel 19, und andrerseits über ein Gaspedal 20, wie dieses in einem Auto gebräuchlich ist. Nach Einschalten der Zündung mit dem Zündungsschlüssel wird mit Drehen des Zündungsschlüssels 19 der Anlasser in Betrieb gesetzt, welcher direkt am Motor 8 angebaut ist. Das Abstellen des Motors erfolgt durch Ausschalten der Zündung mittels des Zündungsschlüssels. Für die Regulierung der Motorleistung ist im gezeigten Beispiel einzig ein Gaspedal 20 vorgesehen. Das am Motor 8 angeflanschte Getriebe 9 ist hier nämlich ein vollautomatisches, sodass der Fahrer nichts mit der Gangwahl zu tun hat, sondern die Geschwindigkeit einzig durch das dosierte Betätigen des Gaspedals 20 kontrolliert. Ein Rückwärtsgang kann mittels Riemenantrieb realisiert werden, indem ein spezieller Elektromotor mit Riemenscheiben, die in ihrer Position zueinander veränderlich sind, mittels einer Fliehkraftkupplung den Riemenantrieb bei Bedarf aktiviert. Dieser Antrieb für die Rückwärtsfahrt ist dabei komplett in die vordere Aufhängung 11 von Motor 8, Getriebe 9 und Vorderrad 7 integriert. Das Bremssystem des motorbetriebenen Dreirad-Fahrzeuges besteht aus einem oder zwei hydraulischen Bremskreisen sowie einer mechanischen Feststellbremse. Durch Betätigen des Bremspedals 21 werden gleichzeitig die Bremsbacken der Scheibenbremsen oder Trommelbremsen mit hydraulischem Druck beaufschlagt. Am Vorderrad ist vorzugsweise eine Scheibenbremse montiert, während hinten wahlweise Trommel- oder Scheibenbremsen zum Einsatz gelangen. Jeder Bremskreis wirkt somit auf alle drei Räder. Die Bremskraftregelung ist so ausgelegt, dass auf die Hinterräder 6 eine grössere Bremskraft wirkt. Der Fahrersitz 22 ist der Art nach wie ein Autositz gestaltet, gestattet also ein ganz normales Sitzen, denn man sitzt nicht rittlings wie auf einem Motorrad. Daher kann dieses Dreirad-Fahrzeug von Damen auch mühelos mit einem engen Jupe gefahren werden. Unter dem Fahrersitz sind die Batterie 23 und der Treibstofftank 24 angeordnet. Weiter befindet sich unter dem Fahrersitz auch die Hydraulikeinheit 62 mit zugehöriger Steuerung zur Betätigung der Hubzylinder einer Stabilisatoreinrichtung, welche zu Figur 8 und 9 noch beschrieben wird. Jedenfalls schliesst diese sehr kompakte und leichte Hydraulikeinheit eine elektrisch angetriebene Hydraulikpumpe ein, wobei sowohl dieser Elektromotor wie auch diese Pumpe platzsparend und geschützt unter dem Fahrersitz 22 untergebracht sind. Der vordere Fahrzeugteil 1 endet hinter dem Sitz 22, wo er über eine parallel zur Fahrzeuglängsachse verlaufende Schwenkwelle 25 über einen gewissen Bereich schwenkbar um die Achse 3 mit dem hinteren Fahrzeugteil 2 verbunden ist. Hierzu ist die Schwenkwelle 25 in einem Drehlager 26 am vorderen Fahrzeugteil 1 geführt. Der hintere Fahrzeugteil 2 besteht im wesentlichen aus einem Rahmen 31 mit zwei etwa horizontal nach hinten verlaufenden, nebeneinander angeordneten, am Rahmen 31 auf und ab schwenkbar angelenkten Längslenkern 27,28, die im Bereich ihres hinteren Endes über je ein Federbein mit Stossdämpfer 29,30 am oberen Teil des Rahmens 31 des hinteren Fahrzeugteiles 2 abgestützt sind. Die hinteren Räder 6 sind aussen an den Enden der Längslenkern 27,28 gelagert. Der hintere Fahrzeugteil 2 bleibt nun in jeder Fahrlage um die Längsachse horizontal, es sei denn, man fahre entlang einer schiefen Ebene. Im normalen Fahrbetrieb aber bleibt der hintere Fahrzeugteil 2 um seine Längsachse stabil, das heisst es steht lotrecht auf der Fahrbahn. Der vordere Fahrzeugteil 1 hingegen neigt sich bei Kurvenfahrt gegen die Kurveninnenseite hin, wie ein Motorrad. Fahrversuche haben gezeigt, dass bei extremer Kurvenfahrt, wenn die Haftreibung an den Hinterrädern 6 abbricht, das Heck wohl etwas wegrutscht, hingegen das Fahrzeug sofort wieder aufgefangen werden kann, ohne dass ein solches Ausrutschen einen Sturz zur Folge hätte, wie das beim Ausbrechen des Hinterrades bei einem Motorrad unweigerlich der Fall wäre. Sollte das Heck stark ausbrechen, so wird die Querneigung des vorderen Fahrzeugteils 1 durch spezielle Schräglagenbegrenzer eingeschränkt. Diese finden auf beiden Seiten je einen Anschlag, wie das zu Figur 3 noch näher beschrieben ist. Der hintere Fahrzeugteil 2 ist dank des Vorderradantriebs frei von jeglichen Antriebselementen und bildet deshalb einen Stauraum mit ebenem und grossem Boden 50, auf dem auch ein Getränkeharass mit 12 Literflaschen Platz findet. Im übrigen fasst der Stauraum wenigstens ein Volumen von etwa 150 Litern. Er ist somit hinreichend gross für den regelmässigen Einkauf für eine vierköpfige Familie.

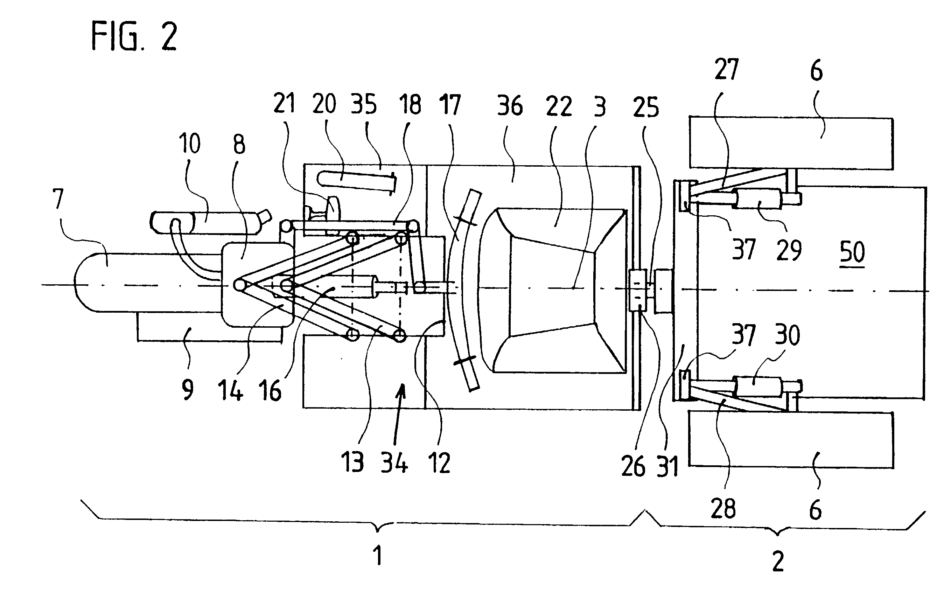

Die Figur 2 zeigt das gleiche Fahrzeug wie Figur 1 in einer schematisierten Draufsicht. Deutlich lässt sich der vordere Fahrzeugteil 1 vom hinteren 2 unterscheiden. Der Lenker 17 ist über das Lenkgestänge 18 mit der Baueinheit aus Motor 8, Getriebe 9 und Vorderrad 7 verbunden. Diese Baueinheit ist über die beiden übereinander angeordneten Dreieckslenker 13,14 mit dem Rahmen 12 oder der Karosserie verbunden und über das Federbein mit Stossdämpfer 16 am Rahmen 12 oder an der selbsttragenden Karosserie abgestützt. Weiter sieht man den Auspuff 10, der auf der einen Seite des Rades 7 angebracht ist und dessen Mündung in Bodennähe liegt. Unterhalb des Sitzes 22 weist der vordere Fahrzeugteil 1 eine Bodenplatte 34 auf, die hinten ansteigt und dann in eine Fläche 36 für die Aufnahme des Fahrersitzes 22 ausläuft. Im Fussraum 35 der Bodenplatte 34 sind das Gaspedal 20 und das Bremspedal 21 in international gebräuchlicher Weise nebeneinander angeordnet. Der ganze vordere Fahrzeugteil 1 ist mittels der Schwenkwelle 25 um die Achse 3 gegenüber dem hinteren Fahrzeugteil 2 verschwenkbar. Die mit dem hinteren Fahrzeugteil 2 fest verbundene Schwenkwelle 25 ist in einem Kugellager 26 am vorderen Fahrzeugteil 1 gelagert. Der hintere Fahrzeugteil 2 besteht aus einem Rahmen 31 mit Boden 50 und zwei gegen oben gerichteten Stützen 37, an denen die oberen Enden der Federbeine mit Stossdämpfer 29,30 angelenkt sind. Die hinteren Räder 6 sind an den beiden Längslenkern 27,28 geführt, welche vorne am Rahmen 31 angelenkt sind. Hinten stützen sich die Federbeine mit Stossdämpfer 29,30 auf diesen Längslenkern 27,28 ab. Der Raum zwischen den beiden Federbeinen mit Stossdämpfern 29,30 bzw. zwischen den beiden Radaufhängungen der Hinterräder 6 bleibt frei. Er kann als Stauraum zum Mitführen von Waren genutzt werden. Dank der Aufhängung der Hinterräder mittels Längslenkern weist der Stauraum einen grossen und ebenen Boden 50 auf. Bei der Spur werden vorzugsweise Masse zwischen 70cm und 100cm gewählt. Die Länge des gesamten Fahrzeuges bei der Version mit einem einzelnen Sitz liegt in der Grössenordnung von ca. 2.30m.

Die Figur 3 zeigt das Fahrzeug mit einer alternativen Vorderradaufhängung 11. Während das Vorderrad 7 wie in der Ausführung nach Figur 1 und 2 oben über Dreieckslenker 14 geführt ist, sind die oberen Dreieckslenker hier ersetzt durch eine Einarmschwinge 66, die das Rad 7 von einer Seite her führt. Hinten ist die Einarmschwinge 66 gegabelt und mit den Gabelenden 67,68 an zwei nebeneinanderliegenden Punkten am Rahmen 12 des Fahrzeugvorderteils 1 oder am Monocock angelenkt, sodass die Einarmschwinge 66 in vertikaler Richtung schwingen kann. Die Federung und Dämpfung erfolgt über ein Federbein mit Stossdämpfer 69, das zwischen der Einarmschwinge 66 und dem Rahmen 12 angeordnet ist. Das besondere an dieser Aufhängung ist, dass das Rad 7 mit der Einarmschwinge 66 an einem Punkt 70 angelenkt ist, der sehr nahe bei der Radachse 5 liegt. Im gezeigten Beispiel ist der Drehpunkt aus Platzgründen etwas unterhalb der Radachse 5 angeordnet. Diese Aufhängung mit Einarmschwinge 66 verleiht dem Fahrzeug eine sehr gute Fahrstabilität. Aehnliche Aufhängungen werden aus demselben Grund an Seitenwagen-Motorrädern für das Vorderrad des Motorrades eingesetzt.

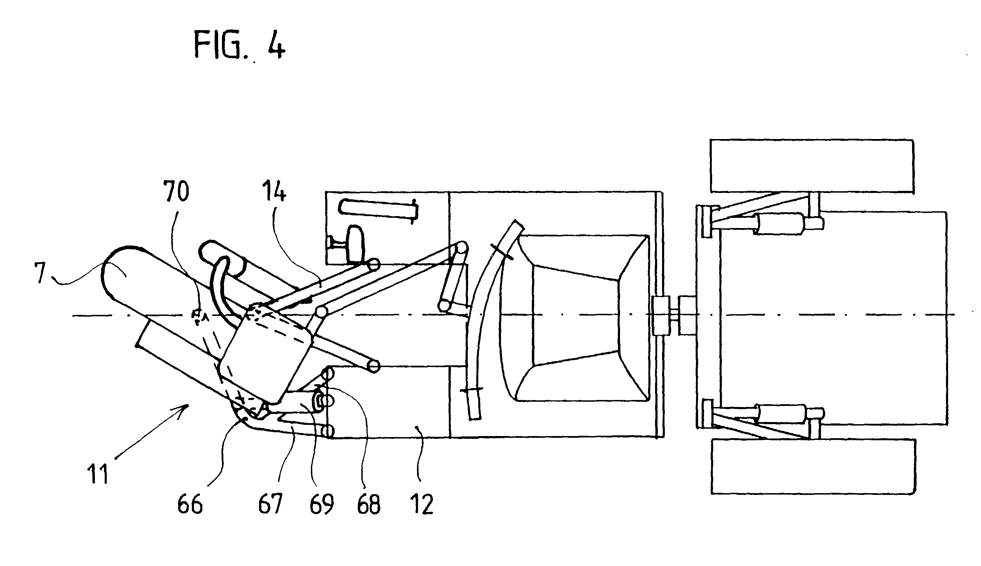

Die Figur 4 zeigt das Fahrzeug nach Figur 3 im Grundriss, wobei hier das Vorderrad 7 nach rechts eingeschlagen ist. Das Vorderrad 7 ist an zwei Drehpunkten geführt, nämlich oben an den Enden der Dreieckslenker 14, und unten beim Drehpunkt 70 am Ende der Einarmschwinge 66. Der Drehpunkt 70 der Einarmschwingen-Aufhängung liegt dabei in der Quermitte des Rades.

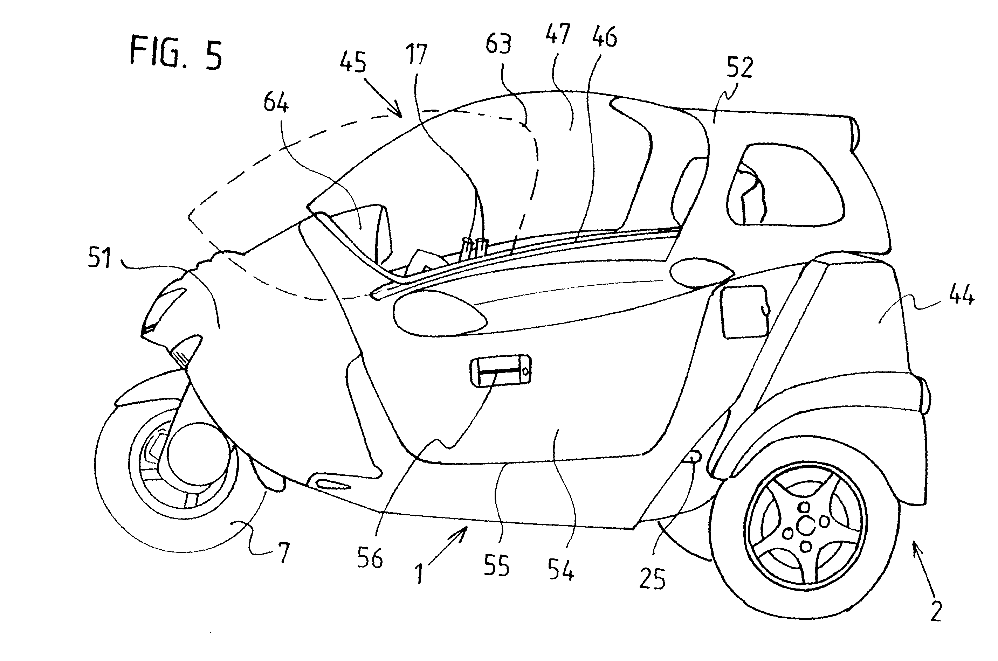

Die Figur 5 zeigt das Fahrzeug von der Seite her gesehen, jetzt aber mit der zugehörigen Karosserie. Das ganze Fahrzeug liegt damit zumindest von der Seite her gesehen mit seiner Erscheinung einem Auto näher als einem Motorrad. Diese Karosserie wird vorteilhaft als selbsttragender Monocock ausgebildet, zum Beispiel aus einem Verbundwerkstoff wie faserverstärktem Polyester, Kevlar, oder aber aus Blech. Die Karosserie besteht im wesentlichen aus drei voneinander getrennten Bauteilen. Zunächst ist der Motor und das Getriebe mit einem eigenen Karosserieteil 51 weitgehend verschalt, wobei dieser Karosserieteil 51 auch die Vorderradaufhängung abdeckt. Dieser Karosserieteil 51 trägt auch den Frontscheinwerfer und die Blinker. Er schützt die Vorderrad-Aufhängung vor Verschmutzung, verbessert die Aerodynamik und trägt postiv zum ästhetischen Erscheinungsbild des Fahrzeuges bei. Fest mit dem vorderen Fahrzeugteil 1 verbunden ist der Karosserieteil 52, welcher im Prinzip die Fahrerkabine 45 bildet. In Fahrt neigen sich diese Karosserieteile 51 und 52 jeweils gegen das Kurveninnere, wie ein Motorrad. Die Fahrerkabine weist eine Sichthaube 47 auf, die ihrerseits am Karosserieteil 52 auf gekrümmten Schienen 46 geführt ist, sodass sie darauf in der Art eines Schiebedaches um etwa einen Drittel ihrer Länge nach vorne geschoben werden kann. Im Schönwetterbetrieb kann so mit geöffneter Sichthaube 47 gefahren werden. Ihr Position 63 in geöffneter Stellung ist strichliniert eingezeichnet. Die schiebbare Haube kann vorteilhaft elektrisch geöffnet und geschlossen werden, wie ein elektrisches Schiebedach an einem Auto. Die Sichthaube 47 kann sogar ganz entfernt werden, und an ihrer Stelle wird dann nur noch eine kleine Windschutzscheibe montiert. Im Innern der Fahrerkabine erkennt man den Lenker 17 und das Armaturenbrett 64. Zum Einund Aussteigen wird die Sichthaube 47, die seitlich mitsamt ihren Schienen 46 mittels Scharnieren auf der rechten Seite des Karosserieteils 52 befestigt ist, wie eine Flügeltüre hochgeschwenkt und dann seitlich weggeschwenkt. Auf der linken, in der Figur 5 einsehbaren Seite der Karosserie sieht man, dass der Karosserieteil 52 hier tiefer ausgeschnitten ist als nur bis zur Sichthaube 47 hinunter. Dadurch ist ein Türbereich 54 mit Schloss und Türfalle oder Griff 56 gebildet, welcher bei geöffneter Sichthaube 47 bzw. Türe eine erniedrigte Einstiegsschwelle 55 schafft und somit ein erleichtertes Ein- und Aussteigung erlaubt. Selbst Damen in Jupes können mit Leichtigkeit das Fahrzeug besteigen. Gleichzeitig bietet dieser Teil 54 der Haube 47 in aufgeschwenktem Zustand ein Dach, sodass man beim Ein- und Aussteigen vor Regen geschützt ist. Der hintere Karosserieteil 44 ist fest mit dem hinteren Fahrzeugteil 2 verbunden. Der Karosserieteil 52 ist schwenkbar gegenüber dem hinteren Karosserieteil 44, weil der hintere Teil 2 in den Kurven in aufrechter Position bleibt, während sich ja der vordere Fahrzeugteil 1 in die Kurve neigt. Die Verschwenkung der beiden Fahrzeugteile 1,2 und deren Karosserieteile 52,44 erfolgt über die Schwenkwelle 25, wie das schon beschrieben wurde.

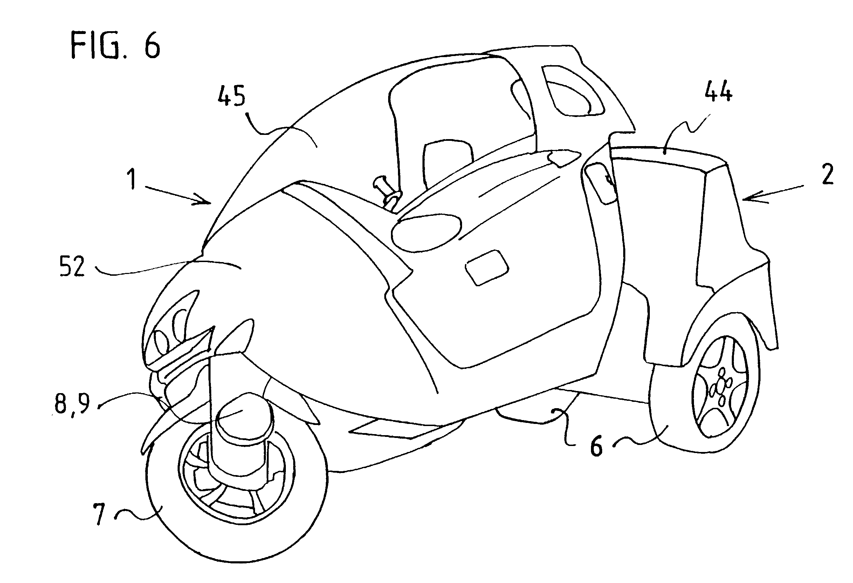

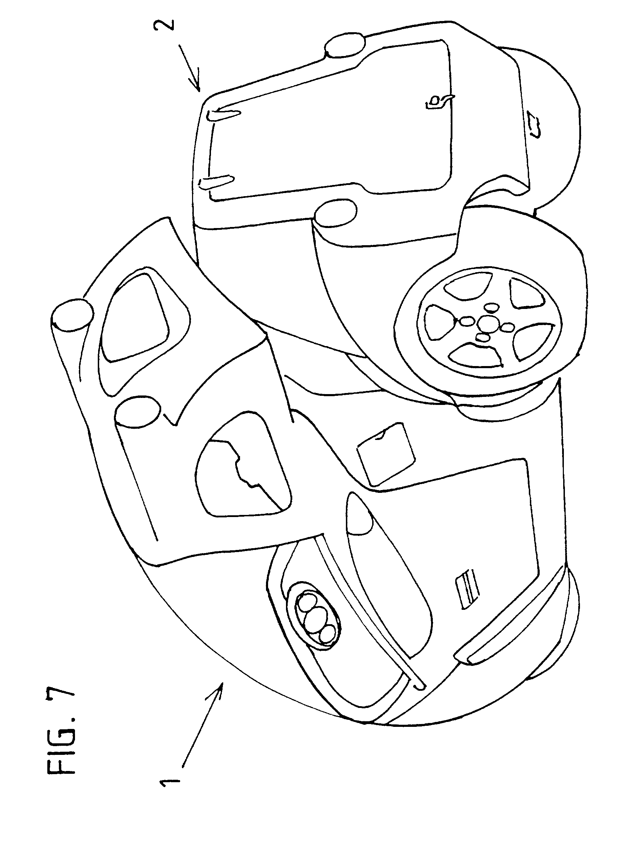

In Figur 6 ist das Fahrzeug in der Schwenklage einer Rechtskurve von schräg vorne her gesehen, während die Figur 7 das Fahrzeug in der Schwenklage einer Linkskurve von schräg hinten zeigt. Man erkennt deutlich, dass der hintere Fahrzeugteil 2 in der Kurve aufrecht bleibt, und dass sich nur der vordere Fahrzeugteil 1 in die Kurve legt.

In Figur 8 ist das Fahrzeug in einer Ansicht von vorne gezeigt. Mit gestrichelter Linie ist hier die Sichthaube 47 in geöffneter Stellung angedeutet. Der Karosserieteil 51, welcher den Motor und die Vorderrad-Aufhängung verschalt, schwenkt mit dem vorderen Fahrzeugteil 1 mit und schliesst aus aerodynamischen Gründen formschlüssig an den anschliessenden Karosserieteil 52 an. Am Karosserieteil 52 sind links und rechts Aussenrückspiegel 57 angeformt. Im Karosserieteil 51 ist ausserdem der Hauptscheinwerfer 58 mit den beidseits anschliessenden Blinkern 59 integriert. Im Innern der Fahrerkabine sieht man das Armaturenbrett 64, welches oben ein Gebläsegitter 60 aufweist, durch welches je nach Bedarf die Warmluft zum Defrosten der Scheibe und zum Heizen strömt, oder beim Kühlen mittels einer Klimaanlage die gekühlte Luft. Hinter dem Armaturenbrett 64 ist der Lenker 17 zu erkennen, und dahinter der Sitz 22 mit Kopfstütze 61.

Die Figur 9 zeigt das Fahrzeug in einer Ansicht von hinten. Zu sehen ist der hintere Karosserieteil 44, unter welchem die Aufhängung der Hinterräder 6, deren Bremsvorrichtung sowie eine Stabilisatoreinrichtung untergebracht ist, die noch im einzelnen beschrieben wird. Dieser hintere Karosserieteil 44 bleibt jedoch sonst weitgehend frei von mechanischen Komponenten und bildet deswegen einen geräumigen Kofferraum von ca. 150 Litern Inhalt. Der hintere Karosserieteil 44 weist vorteilhaft eine verschliessbare, gasfedergestützte Heckklappe 49 auf, die den Zugriff zum Stauraum zwischen den beiden hinteren Rädern 6 freigibt. Dabei kann das Heck eine nach hinten herabklappbare Zusatzladefläche aufweisen, wobei dann die Heckklappe mit dem hinteren Ende dieser Zusatzladefläche abschliesst. Die dadurch seitlich gebildeten offenen Dreiecke werden zum Beispiel von flexiblem Planenmaterial verschlossen, oder es sind feste Platten vorhanden, die aus dem Kofferraum wie Türflügel in diese Dreiecke herausschwenkbar sind. Somit lässt sich der Kofferraum im Bedarfsfall wesentlich vergrössern. Die Heckbeleuchtung 48 ist oben am hinteren Ende des vorderen Karosserieteils 52 angebracht, sodass die Leuchten wie Schlusslichter, Blinker, Bremsleuchten und Nebelleuchte von allen übrigen Verkehrsteilnehmern leicht einsehbar sind. Zwischen diesen Heckleuchten ist eine Heckscheibe 65 angeordnet, sodass zum Rückwärtsfahren der freie Blick nach hinten gewährleistet ist.

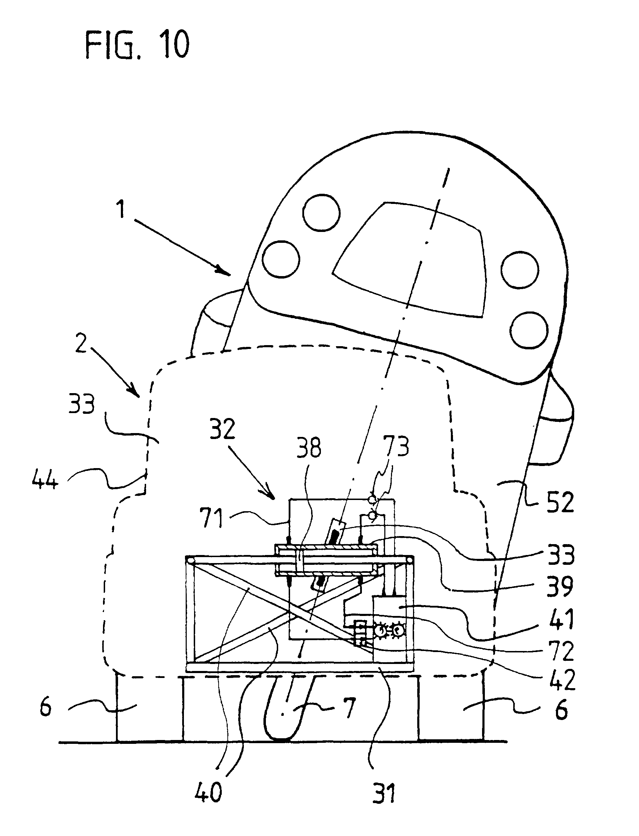

Die Figur 10 zeigt das Fahrzeug von hinten gesehen in einer Rechtskurve fahrend, wobei der hintere, aufrecht die Kurve durchfahrende Karosserieteil 44 gestrichelt eingezeichnet ist, um den Blick auf die Stabilisator-Einrichtung freizugeben, mittels derer die Verschwenkung der beiden Fahrzeugteile 1,2 gegeneinander unter Kontrolle gehalten werden kann. Die hier schematisiert gezeigte Stabilisator-Einrichtung ist jedoch bloss eine unter mehreren möglichen Ausführungen. Es versteht sich, dass eine zwangsweise Verschwenkung oder Blockierung der beiden zueinander verschwenkbaren Fahrzeugteile 1,2 auch mittels alternativer Mittel bewerkstelligt werden kann. Im normalen Fahrbetrieb, das heisst, wenn das Fahrzeug eine Geschwindigkeit erreicht hat, bei welcher sich aufrichtende Momente einstellen, sodass der vordere Teil 1 stabil wie ein Motorrad fährt, sind die beiden Fahrzeugteile 1,2 ganz frei gegeneinander um die zu Figur 1 schon beschriebene Schwenkachse 3 verschwenkbar. Fährt man wie hier gezeigt eine Kurve, so neigt sich der Fahrzeugvorderteil 1 wie ein Motorrad gegen das Kurveninnere, während der hintere Fahrzeugteil 2 mit seinem gestrichelt eingezeichneten Karosserieaufbau 44 auf beiden Rädern 6 aufrecht die Kurve durchfährt. Ausgangs der Kurve richtet sich der vordere Fahrzeugteil 1 wieder auf.

In der Figur 10 ist nun die Stabilisatoreinrichtung schematisiert dargestellt. Sie besteht aus einem horizontal angeordneten, beidseitig wirkenden Hydraulikzylinder 39, in dem also ein Kolben 38 hin und her verschiebbar ist, der auf jeder Seite eine Kolbenstange aufweist. Die beiden Kolbenstangen sind mit ihren Enden am Rahmen 31 des Fahrzeug-Hinterteils 2 angelenkt. Damit der Rahmen 31 die Kräfte der Kolbenstangen aufnehmen kann, ist er mit den Verstrebungen 40 versteift. Der Hydraulikzylinder 39 ist mit seinem Gehäuse in einer Führungsschiene 33 geführt, die am Fahrzeug-Vorderteil 1 in Richtung der Schwenkradialen befestigt ist. Auf jeder Seite des Kolbens ist ein gesonderter Hydraulikkreislauf 71,72 an den Hydraulikzylinder 39 angeschlossen. Diese Kreisläufe führen von einer gemeinsamen Hydraulikpumpe 41 aus zunächst über je ein Einwegventil 73 in den Hydraulikzylinder 39, und von da über je ein steuerbares Einwegventil 42 wieder zurück zur gemeinsamen Hydraulikpumpe 41. Sind die steuerbaren Einwegventile 42 beide offen und läuft die Hydraulikpumpe 41, so fördert sie Hydrauliköl über die Einwegventile 73 durch beide Kreisläufe 71,72 und somit wird der Hydraulikzylinder 39 bloss gespült. Die auf den Kolben 38 wirkenden hydraulischen Kräfte sind dabei vernachlässigbar klein und heben sich ohnehin auf. Die beiden Fahrzeugteile 1 und 2 sind somit frei gegeneinander verschwenkbar. Soll der vordere Fahrzeugteil 1 nun bewusst gegenüber dem hinteren 2 verschwenkt werden, zum Beispiel aus der hier gezeigten Position heraus nach links, so wird das untere Einwegventil 42 für den Kreislauf 71 gesperrt. Das Hydrauliköl, welches vom Hydraulikkreislauf 71 in den Hydraulikzylinder 39 gelangt, staut sich nun im Zylinderraum links vom Kolben 38 und bewirkt, dass dieser im Zylinder 39 nach rechts verschoben wird, beziehungsweise dass sich der Hydraulikzylinder 39 mitsamt der Führungsschiene 33 und dem vorderen Fahrzeugteil 1 nach links verschiebt. Ist die gewünschte Schwenklage erreicht, so wird auch das zweite Einwegventil 42 für den Hydraulikkreislauf 72 gesperrt, wonach der Kolben 38 im Hydraulikzylinder 39 von beiden Seiten mit Druck beaufschlagt wird und in dieser Position der Kolben gehalten wird, weil das Hydrauliköl in keine Richtung mehr entweichen kann. Das Fahrzeug hat somit in bezug auf seine zueinander verschwenkbaren Teile 1,2 eine feste Konfiguration eingenommen und ist bei langsamer Geschwindigkeit wie ein herkömmliches Dreirad mit stabilem Rahmen zu fahren. Dies ist bei Langsamfahrt oder im Stillstand auch erwünscht. Ein besonderes Problem bietet nun aber das Lösen der festen Konfiguration bzw. das Freigeben der Verschwenkbarkeit zwischen Vorder- 1 und Hinterteil 2 des Fahrzeuges beim Fahren, wenn ausgehend aus dieser festgehaltenen Konfiguration bei einer bestimmten Geschwindigkeit die festgehaltene Konfiguration abrupt gelöst würde und die beiden Fahrzeugteile 1 und 2 unvermittelt frei gegeneinander verschwenkbar würden. Würde man nämlich aus dem Stillstand in stabiler Konfiguration zwischen Hinter- 2 und Vorderteil 1 des Fahrzeugs wegfahren und dann bei einer Geschwindigkeit, die noch unterhalb der eingestellten Minimalgeschwindigkeit liegt, in eine Kurve fahren, und während der Kurvenfahrt über diese Minimalgeschwindigkeit hinaus beschleunigen, und würde die Verschwenkbarkeit in diesem Moment abrupt freigegeben, so würde der Fahrzeug-Vorderteil 1 gegen die Kurvenaussenseite hin umkippen. Es ist deshalb nötig, dass der Fahrzeug-Vorderteil beim Beschleunigen aus dem Stillstand im Falle einer Kurvenfahrt zwangsweise kontinuierlich mit der Beschleunigung gegen die Kurveninnenseite hin geneigt wird. Dieses wird durch eine spezielle Neigungs-Automatik besorgt. Diese Automatik schliesst eine Messeinrichtung für die Querbeschleunigung am Vorderteil 1 des Fahrzeuges ein, vorzugsweise eine Pendeleinrichtung, welche einen Mikroprozessor mit der Pendelstellung als Eingangssignal beliefert. Der Mikroprozessor erhält auch noch die aktuelle Geschwindigkeit als Eingangsgrösse und er verarbeitet diese Informationen zur aktuell erforderlichen Schräglage des vorderen Fahrzeugteils 1 nach einer vorgegebenen Kennkurve. Wenn das Fahrzeug nun aus dem Stand angefahren wird und mit fester Konfiguration direkt in einer Kurve wegfährt, so schlägt das Pendel im vorderen Fahrzeugteil aufgrund der wirkenden Fliehkraft sofort gegen die Kurvenaussenseite hin aus. Zwischen dem Pendel und der Hochachse des vorderen Fahrzeugteils 1 stellt sich damit ein Winkel ein. Diese Winkelgrösse wird gemessen und dient als Eingangsgrösse für den Mikroprozessor. Der Mikroprozessor verarbeitet dieses Eingangssignal zusammen mit der Geschwindigkeit des Fahrzeuges zu einer Stellgrösse für die Stabilisatoreinrichtung. Als Resultat wird der Hydraulikzylinder sofort in so eine Position gefahren, dass der Ausschlagwinkel des Pendels gegenüber der Hochachse des Fahrzeugvorderteils 1 minimiert wird, indem der vordere Fahrzeugteil 1 entsprechend geneigt wird. Somit wird, ausgehend von einer festen Konfiguration zwischen Vorder- 1 und Hinterteil 2 des Fahrzeuges, beim Fahren aus dem Stillstand die Schräglage bei Kurvenfahrt kontinuierlich zunächst zwangsweise eingestellt und dann ab einer bestimmten, eingestellten Minimalgeschwindigkeit von zum Beispiel 3km/h frei eingenommen, das heisst die beiden Hydraulikkreisläufe bleiben offen und somit wirken keine hydraulischen Kräfte auf die beiden Kolbenseiten. Umgekehrt wird bei Unterschreiten der eingestellten Minimalgeschwindigkeit in Kurvenfahrt die Stabilisatoreinrichtung aktiv und setzt bei der nötigen und vom Fahrzeugvorderteil 1 bereits eingenommenen Neigung ein, sodass dieser in der entsprechenden Lage nahtlos aufgefangen wird. Bei weiterer Reduktion der Geschwindigkeit wird somit der ganze vordere Fahrzeugteil 1 gemäss der durch die Pendeleinrichtung ermittelten und gerade nötigen Neigung aktiv geführt und gehalten.

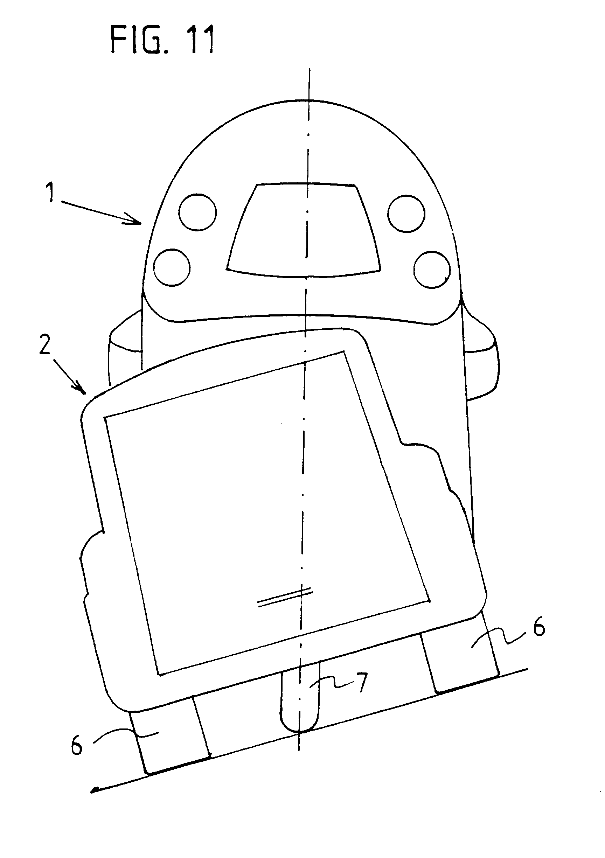

Es gibt im wesentlichen nur ein kritisches Fahrmanöver, das mit der bisher beschriebenen Automatik nicht zufriedenstellend geregelt wird, nämlich wenn der hintere Fahrzeugteil 2 aufgrund der Fahrbahn eine Querneigung aufweist, wie das in Figur 11 gezeigt ist. Das ist dann der Fall, wenn man quer auf eine schiefe Ebene auffährt und dann dort anhält, oder wenn man von einer schiefen Ebene, auf der man längs der Höhenkurve parkiert hat, wegfahren will. Das kann zum Beispiel dann passieren, wenn auf einem abschüssigen Parkplatz parkiert werden soll, wo die Parkplätze in horizontaler Richtung verlaufend angeordnet sind, oder auch nur schon dann, wenn man mit einem Hinterrad auf den Bordstein eines Gehsteigs auffährt und dann anhält. Kommt man also mit einer geringen Geschwindigkeit angefahren, bei der die Stabilisatoreinrichtung inaktiv ist und also die volle seitliche Schwenkung des vorderen Fahrzeugteils 1 erlaubt, so wird beim auf das Parkfeld fahren der hintere Fahrzeugteil 2 schief stehen, entsprechend der seitlichen Neigung der Parkfeldfläche, während der vordere Fahrzeugteil 1 lotrecht steht, wie eben ein Motorrad ebenfalls lotrecht steht, wenn es auf einer schiefen Ebene längs der Höhenkurve gefahren wird. Diese Situation ist in Figur 11 dargestellt. Gefährlich könnte nun sein, wenn beim Anhalten aufgrund des Unterschreitens der eingestellten Minimalgeschwindigkeit die Stabilisatoreinrichtung plötzlich aktiv wird, wie sie das ja tun würde, wenn der hintere Fahrzeugteil 2 auf einer horizontalen Fläche stehen würde. Das würde nämlich bewirken, dass der vordere Fahrzeugteil 1 plötzlich rasch gegen die abfallende Richtung der Standfläche hin geschwenkt würde. Der vordere Fahrzeugteil 1 würde dann in der Schwenkung wieder gestoppt, und dabei könnte sein mit dem Fahrer gemeinsamer Schwerpunkt seitlich über die talseitige Verbindungslinie zwischen Vorderrad 7 und Hinterrad 6 hinaus verschoben werden, was unweigerlich das Kippen des ganzen Fahrzeuges nach sich ziehen würde. Um dem vorzubeugen, muss die geneigte Lage des hinteren Fahrzeugteils 2 kompensiert werden, das heisst die Stabilisatoreinrichtung muss "wissen", ob der hintere Fahrzeugteil 2 schief steht und wenn ja in welchem Ausmass. Um diese Kompensation bewerkstelligen zu können, ist eine Messeinrichtung nötig, welche die seitliche Neigung des hinteren Fahrzeugteils 2 misst. Weil diese Messung nur für sehr geringe Geschwindigkeiten relevant ist, bei denen die Querbeschleunigungen am Fahrzeug keine Rolle spielen, kann hierzu ebenfalls ein Pendel eingesetzt werden. Als alternative Messeinrichtung könnte auch eine Wasserwaage in Frage kommen. Dieser Neigungsmesser gibt also bei niedrigen Geschwindigkeiten stets die Richtung und das Mass der Querneigung des hinteren Fahrzeugteils 2 an und diese Grössen werden ebenfalls vom Mikroprozessor der Stabilisatoreinrichtung verarbeitet. Somit kann dieser für alle denkbaren Fahrsituationen die gewünschte Stellung des Hydraulikzylinders 39 errechnen. Grundsätzlich wird mit dieser Stabilisatoreinrichtung sichergestellt, dass die Querbeschleunigung am vorderen Fahrzeugteil 1 in allen Fahrsituationen zwischen der Geschwindigkeit Null und der eingestellten Minimalgeschwindigkeit, bei welcher die Stabilisatoreinrichtung inaktiv wird, durch zwangsweise Einstellung einer entsprechenden Schräglage des vorderen Fahrzeugteils 1 minimiert wird. Dabei berücksichtigt das Fahrzeug automatisch die Querneigung des hinteren Fahrzeugteils 2, welche ja als Referenzbasis für die aktuell nötige Ausschwenkung durch die Stabilisatoreinrichtung dient, bzw. die Position, welche der Hydraulikzylinder 39 jeweils einnehmen muss.

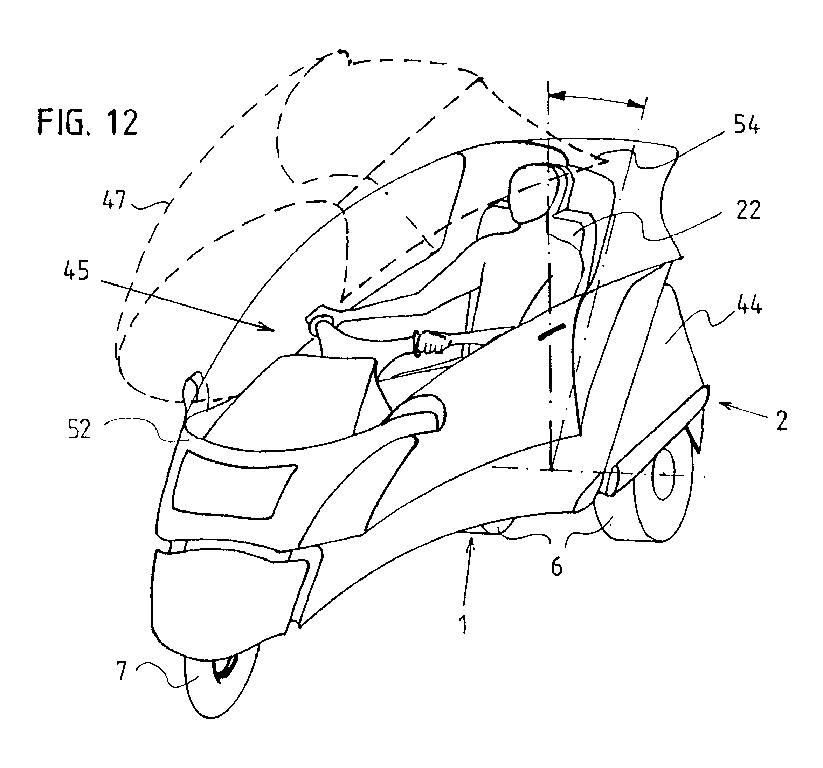

Die Figur 12 schliesslich zeigt das motorbetriebene Dreirad-Fahrzeug in Kurvenfahrt in perspektivischer Ansicht dargestellt. Ausserdem ist die Sichthaube 47 bzw. Türe 54 in aufgeschwenktem Zustand durch Strichlinien angedeutet. In dieser Figur ist zu erkennen, wie der vordere Fahrzeugteil 1 ähnlich wie ein Motorrad bei Kurvenfahrt gegen die innere Kurvenseite neigt, während der hintere Fahrzeugteil 2 stets aufrecht auf seinen beiden Rädern 6 rollt. Das Mass der aktuellen Verschwenkung ist hier mit einem strickpunktierten Winkel angedeutet. Dieser seitliche Neigungswinkel beträgt dabei im Fahrbetrieb bis etwa 40°. Diese Konfiguration mit einerseits neigbarem Fahrzeugteil 1 und andrerseits aufrecht bleibendem Fahrzeugteil 2 bietet den Vorteil eines besonders ansprechenden Fahrgefühls und gleichzeitig bietet der aufrecht nachrollende hintere Fahrzeugteil 2 den Vorteil erhöhter Sicherheit bei glitschiger Fahrbahn. Während ein Motorrad beim unvermitteltem Ausbrechen des Hecks kaum mehr einen Sturz vermeiden lässt, so zieht das Ausbrechen des auf zwei senkrechten Rädern 6 laufenden Heckteils 2 noch lange keinen unkontrollierbaren Fahrzustand nach sich, wie das praktische Versuche zeigten. Damit ist dieses Dreirad-Fahrzeug auch ohne weiteres auf schneebedeckter Strasse einsetzbar.

Das Dreirad-Fahrzeug kann von verschiedenartigen Motoren angetrieben sein. Der bewährteste wird ein Benzinmotor sein, weil er einen hohen Entwicklungsstand aufweist und ein sehr gutes Leistungsgewicht bietet. Spielt die Leistung eine weniger grosse Rolle, dafür umsomehr die Langlebigkeit und die Sparsamkeit, so ist auch der Einsatz von kleinen Dieselmotoren denkbar. Als emmissionsfreie Motoren sind Elektromotoren einsetzbar, welche jedoch punkto Leistung und Reichweite nicht das Gleiche wie Verbrennungsmotoren bieten können. Das nächstliegende ist ein wassergekühlter 4-Takt-Benzinmotor mit Mehrventil-Technik, welcher ein niedriges Leistungsgewicht bei geringem Lärm und Einhaltung tiefer Abgaswerte aufweist. So bietet sich als Minimallösung ein 125ccm Rollermotor an, der etwa 12kW Leistung bringt. Es sind aber auch Motoren mit grösserem Hubraum einsetzbar, zum Beispiel mit 250ccm Hubraum oder noch mehr, wie sie schon für Roller gebräuchlich sind. Solche Motoren haben bereits ein angebautes, automatisches Getriebe. Weil eine Antriebseinheit eines Rollers für den Einbau in dieses Dreirad jedoch um etwa 90° aufgestellt wird, muss der Motor geringfügig modifiziert werden und mit einer Trockensumpfschmierung ausgerüstet werden. Für grössere Serien wird es sich lohnen, spezielle Motoren zu bauen, welche dann von allem Anfang an für die stehende Einbauweise entwickelt werden. Aufgrund der hervorragenden Aerodynamik eines derartigen Fahrzeuges mit zudem geringer Stirnfläche ist bei einer Motorisierung mit einem herkömmlichen 125ccm Rollermotor ein Betrieb bei einem Treibstoffverbrauch von um die 2 Liter pro 100 km zu erwarten. Selbstverständlich können auch noch leistungsfähigere Modelle gebaut werden, für mehr als nur eine Person, und mit bedeutend stärkerer Motorisierung.

Weil die Fahrerkabine 45 im Fahrbetrieb vollständig geschlossen werden kann, ist es möglich, die Kabine wirksam zu beheizen oder auch zu kühlen. Zum Heizen wird ein am Motor oder an der Fahrerkabine angebautes Gebläse eingesetzt, welches Luft durch einen Wärmetauscher bläst, der im Wärmeaustausch mit dem Motor steht. In dieser Weise kann nach bekannter Art die Wärme sowohl eines luftgekühlten wie auch eines wassergekühlten Motors genutzt werden. Die erwärmte Luft wird sodann an mehreren Stellen in die Kabine 45 sowie auf die Innenseite deren Frontscheibe geblasen. Der Motor kann auch einen direkt an ihm angebauten Kompressor antreiben, welcher ein Kühlmittel komprimiert, sodass dieses über Schläuche mit einem Kühler und einem Wärmetauscher in Verbindung steht, wobei diese Elemente fest am Rahmen des vorderen Fahrzeugteils 1 befestigt sind. Durch diesen Kühlkreislauf lässt sich das Kabineninnere über ein Gebläse klimatisieren. Die Frontscheibe weist einen Scheibenwischer auf, der in konventioneller Art von einem Elektromotor angetrieben ist. Die beiden Karosserieteile 44,52 sind aus aerodynamischen Gründen so gestaltet, dass sie bei Geradeausfahrt dicht aneinander anschliessen, um Randwirbel in der vorbeiströmenden Luft zu vermeiden, und weiter müssen sie so zueinander passen, dass sie um einen gewissen festgelegten Schwenkbereich gegeneinander um die Schwenkwelle 25 verschwenkbar sind.

Durch die geschlossene und abschliessbare Karosserie 44,52 kann der Fahrzeugbenützer dieses Fahrzeug auch zur Einkaufsfahrt einsetzen. Gerade wenn an verschiedenen Orten Einkäufe getätigt werden, können bereits eingekaufte Waren im Fahrzeug bzw. dessen Stauraum versorgt werden und der Stauraum kann abgeschlossen werden, wonach man das Fahrzeug hier oder an einem anderen Einkaufsort stehenlassen kann und sich weiteren Einkäufen zuwenden kann. Im Vergleich dazu hat der Roller- oder Motorradfahrer stets das Problem, beim Einkaufsbummel in verschiedenen Geschäften alle eingekauften Sachen mit sich herumtragen zu müssen, weil er sie nirgends sicher zwischenlagern kann. Die Kabine 45 bietet im übrigen alle Komfortvorteile eines Auto-Insassenraumes. Insbesondere ist der Geräuschpegel dank Einsatz von isolierendem und wärmedämmendem Material zwischen Motor und Innenraum der Kabine 45 niedrig, was dann auch den Betrieb eines eingebauten Radios oder Tonbandes sowie eines Mobiltelefons erlaubt, was bei einem Motorrad nur sehr eingeschränkt möglich ist. Das Fahrzeugkonzept erlaubt auch Ausführungen mit zwei hintereinander angeordneten Sitzplätzen. Für Monteure, Lieferanten, Kuriere usw. lässt sich mit diesem Fahrzeug bei Bedarf auch ein einachsiger Anhänger von maximal gleicher Spur wie der hintere Fahrzeugteil 2 ziehen, um zusätzliche Transportkapazität zu schaffen. Die Auslieferung vieler Sachen im Alltagsgeschäft bedingt nämlich nicht unbedingt ein ganzes Automobil, um diese Gänge und Transporte effizient abzuwickeln. Der weit überwiegende Anteil des Berufsverkehrs, welcher derzeit mit Personenwagen abgewickelt wird, könnte mit diesem motorbetriebenen Dreirad ebenso komfortabel, jedoch ökologischer, sparsamer und beweglicher abgewickelt werden. Vorallem würden die Strassen im innerstädtischen Verkehr entlastet, können doch zwei derartige Fahrzeuge auf einer Spur nebeneinander fahren, und die Parkplatznot würde gelindert, weil bis zu vier solcher Fahrzeuge auf einem herkömmlichen Parkplatz für einen Personenwagen untergebracht werden können.

## Patentansprüche

1. Motorbetriebenes Dreirad-Fahrzeug mit Vorderradantrieb für den Strassenverkehr, das aus zwei um seine Längsachse verschwenkbaren Teilen (1,2) besteht, wobei sein Hinterteil (2) ein Fahrgestell für zweispurig angeordnete Räder (6) aufweist, und der zu diesem Hinterteil (2) verschwenkbare Vorderteil (1) den Fahrersitz (22) und ein über eine Vorderradaufhängung gefedertes und gelenktes Vorderrad trägt, ***dadurch gekennzeichnet,* dass** die Vorderradaufhängung aus zwei übereinander angeordneten Dreieckslenkern (13,14;66,14) besteht, die je um eine quer zur Fahrzeug-Längsachse verlaufende Horizontalachse auf und ab schwenkbar sind und an ihrer Vorderseite die Lenkachse des Vorderrades (7) tragen, wobei wenigstens einer der Dreieckslenker (14;66) über ein Stossdämpfer/Federbein (16;69) am Rahmen (12) oder Monocock (52) des Fahrzeug-Vorderteils (1) abgestützt ist.

2. Motorbetriebenes Dreirad-Fahrzeug nach Anspruch 1, ***dadurch gekennzeichnet*, dass** der untere Dreieckslenker (66) eine Einarmschwinge (66) bildet, welche die Lenkachse des Vorderrades (7) von einer Seite her im Bereich unterhalb der Radachse (5) führt, wobei die Einarmschwinge (66) mit einem Stossdämpfer/Federbein (69) am Rahmen (12) oder am Monocock (52) abgestützt ist.

3. Motorbetriebenes Dreirad-Fahrzeug nach einem der vorhergehenden Ansprüche, ***dadurch gekennzeichnet,* dass** die Vorderradaufhängung (11) nebst dem Vorderrad (7) auch den Motor (8) mit Getriebe (9) zu dessen Antrieb trägt, sodass die Baueinheit aus Motor (8), Getriebe (9) und Vorderrad (7) seitlich um die in Fahrtrichtung schräg abwärts verlaufende Lenkachse (15) schwenkbar ist, die hinter der vorderen Radachse (5) schräg nach unten verläuft.

4. Motorbetriebenes Dreirad-Fahrzeug nach einem der vorhergehenden Ansprüche, ***dadurch gekennzeichnet,* dass** es eine geschlossene Karosserie aufweist, die aus einem um seine Längsachse verschwenkbaren Rahmen mit Karosserieteilen (44,52) besteht, oder dass die Karosserie des Vorderteils (1) als selbsttragende Fahrerkabine (52) in Form eines Monocock ausgeführt ist, wobei die Karosserie aus zwei um die Fahrzeug-Längsachse gegeneinander verschwenkbaren Teilen (44,52) besteht, wobei deren hinterer Teil (44) fest mit dem Rahmenhinterteil (2) verbunden ist und deren vorderer Teil (1;52) als Fahrerkabine (45) mit verschliessbarer Ein- und Ausstiegslucke oder -türe ausgeführt ist.

5. Motorbetriebenes Dreirad-Fahrzeug nach einem der vorhergehenden Ansprüche, ***dadurch gekennzeichnet,* dass** der hintere Fahrzeugteil (2) aus einem Rahmen (31) mit zwei etwa horizontal nach hinten verlaufenden Längslenkern (27,28) für die Hinterräder (6) besteht, die im Bereich ihres hinteren Endes über je ein Federbein mit Stossdämpfer (29,30) am oberen Teil des Rahmens (31) des hinteren Fahrzeugteiles (2) abgestützt sind.

6. Motorbetriebenes Dreirad-Fahrzeug nach einem der vorhergehenden Ansprüche, ***dadurch gekennzeichnet,* dass** die Fahrerkabine (45) mindestens einen Autositz (22) aufweist, und im Fussraum der Fahrerkabine (45) ein Gaspedal (20) und ein Bremspedal (21) angeordnet ist, sowie ein Lenker (17) nach Art eines Motorrad- oder Rollerlenkers.

7. Motorbetriebenes Dreirad-Fahrzeug nach einem der vorhergehenden Ansprüche, ***dadurch gekennzeichnet,* dass** eine Stabilisatoreinrichtung (32) vorhanden ist, mittels derer die beiden zueinander verschwenkbaren Fahrzeugteile (1,2) unterhalb einer einstellbaren Geschwindigkeit zwangsweise nach einer Kennlinie gegeneinander verschwenkbar sind und in der jeweiligen Schwenklage festhaltbar sind.

8. Motorbetriebenes Dreirad-Fahrzeug nach Anspruch 7, ***dadurch gekennzeichnet,* dass** die Stabilisatoreinrichtung (32) Steuermittel und eine Hydraulikpumpe (41) einschliesst, sowie einen beidseits wirkenden Hydraulikzylinder (39), der an einer Führungsschiene (33) geführt ist, die am vorderen Fahrzeugteil (1) sitzt und sich längs dessen Schwenkradialen erstreckt, wobei die beiden Kolbenstangen mit ihren Enden am Rahmen (31) des hinteren Fahrzeugteils (2) angelenkt sind, und dass der Hydraulikzylinder (39) auf jeder Seite des Kolbens (38) an einen Hydraulikkreislauf (71,72) mit je einem steuerbaren Einwegventil (42) angeschlossen ist, sodass der Hydraulikzylinder (39) je nach Fahrsituation in eine Einstell-Lage bringbar und dort festhaltbar ist.

9. Motorbetriebenes Dreirad-Fahrzeug nach Anspruch 8, ***dadurch gekennzeichnet,* dass** die Steuermittel eine Messeinrichtung für die Querbeschleunigung am vorderen Fahrzeugteil (1), für die Querneigung des hinteren Fahrzeugteils (2) sowie für die Fahrgeschwindigkeit des Fahrzeuges einschliessen, sowie eine Mikroprozessor-Steuerung, mit welcher diese Messgrössen zu Ausgangssignalen für die Betätigung der Einwegventile (42) verarbeitbar sind, sodass die Querbeschleunigung am vorderen Fahrzeugteil (1) durch Einstellen und Festhalten der errechneten Schräglage in allen Fahrsituationen unterhalb einer einstellbaren Geschwindigkeit minimierbar ist.

10. Motorbetriebenes Dreirad-Fahrzeug nach einem der vorhergehenden Ansprüche, ***dadurch gekennzeichnet*, dass** die Fahrerkabine (45) eine auf beidseits der Fahrerkabine (45) angeordneten Schienen (46) nach vorne verschiebbare Sichthaube (47) aufweist, und dass die Sichthaube (47) zum Ein- und Aussteigen nach Art einer Flügeltüre seitlich aufschwenkbar ist, und dass der hintere Karosserieteil (44) eine verschliessbare, gasfedergestützte Heckklappe (49) aufweist, wobei im Heck eine nach hinten herabklappbare Zusatzladefläche vorhanden ist, sodass die Heckklappe (49) bei herabgeklappter Zusatzladefläche mit dem hinteren Ende dieser Zusatzladefläche schliesst und die seitlich gebildeten Dreiecke von flexiblem Planenmaterial oder von festen, aus dem Kofferraum wie Türflügel herausschwenkbaren Platten gebildet sind.

## Claims

1. A motor-driven three-wheeled vehicle with front wheel drive for road traffic, comprising two parts (1,2) that can be tilted around its longitudinal axis and its rear part (2) has a chassis for two-track wheels (6) and the front part (1), which can be tilted relative to this rear part (2), accommodates the driver's seat (22) and a suspended and steered front wheel on a front wheel suspension, ***characterized in that*** the front wheel suspension comprises two triangular steering elements (13,14;66,14) arranged one on top of the other, which are each tiltable up and down around a horizontal axis across the longitudial axis of the vehicle and bear on their front side the steering axle of the front wheel (7), whereby at least one of these triangular steering elements (14,66) is resting against the frame (12) or monocoque (52) of the front part (1) of the vehicle by means of a strut with shock absorber (16,69).

2. The motor-driven three-wheeled vehicle of claim 1, ***characterized in that*** the lower triangular steering element (66) is a one-arm rocker arm (66) which guides the steering axle of the front wheel (7) from one side in the region below the wheel axle (5), with the one-arm rocker arm (66) resting against the frame (12) or monocoque (52) by means of a strut with shock absorber (69).

3. The motor-driven three-wheeled vehicle of one of the preceding claims, ***characterized in that*** the front wheel suspension (11) carries beside the front wheel (7) also the engine (8) with gear (9) for driving it, whilst the structural unit comprising the engine (8), the gears (9) and the front wheel (7) can be tilted to the side around the steering axle (15) running downwards at an angle in the direction of travel, which runs downwards at an angle behind the front wheel axle (5).

4. The motor-driven three-wheeled vehicle of one of the preceding claims, **characterized in that** it has a closed body consisting of a frame which can be tilted around its longitudinal axis, with body parts (44,52), or **in that** the body of the front part (1) is designed as a monocoque driver's cabin (52), with the body consisting of two parts (44,52) which can be tilted relative to each other around the vehicle's longitudinal axis, with its rear part (44) being rigidly connected with the rear part of the frame (2) and its front part (1;52) being designed as the driver's cabin (45) with a lockable entry and exit space or door.

5. The motor-driven three-wheeled vehicle of one of the preceding claims, **characterized in that** the rear vehicle part (2) consists of a frame (31) with two trailing arms (27,28) running backwards approximately horizontally for the rear wheels (6), which are each supported against the upper part of the frame (31) of the rear vehicle part (2) in the vicinity of their rear end by a strut with shock absorber (29,30).

6. The motor-driven three-wheeled vehicle of one of the preceding claims, **characterized in that** the driver's cabin (45) has at least one car seat (22), and **in that** an accelerator pedal (20) and a brake pedal (21) are disposed in the foot area of the driver's cabin (45), and it has a handlebar (17) like the handlebars used on a motorbikes or scooters.

7. The motor-driven three-wheeled vehicle of one of the preceding claims, **characterized in that** there is a stabilizer device (32) by means of which the two vehicle parts (1,2) which can be tilted relative to each other can be forcibly tilted relative to each other according to a characteristic line and held in place **in that** particular tilt below a pre-set speed.

8. The motor-driven three-wheeled vehicle of one of the preceding claims, **characterized in that** the stabilizer device (32) incorporates control means and a hydraulic pump (41) and a hydraulic cylinder (39) that acts on both sides which is guided on a guide rail (33) mounted on the front vehicle part (1), and extends along the tilt radials thereof, with the two piston rods being attached by their ends to the frame (31) of the rear vehicle part (2), and **in that** the hydraulic cylinder (39) is connected on each side of the piston (38) to hydraulic circuits (71,72) each with controllable one-way valves (42) so that, depending on the driving situation, the hydraulic cylinder (39) can be brought into a particular position and held there.

9. The motor-driven three-wheeled vehicle of claim 8, **characterized in that** the control means comprise a device for measuring the transverse acceleration on the front vehicle part (1), the transverse inclination of the rear vehicle part (2) and the vehicle speed, and a microprocessor control for processing these measured values into output signals for actuating the one-way valves (42) so that the transverse acceleration on the front vehicle part (1) can be minimized by setting and maintaining the calculated tilt in all driving situations below a pre-set speed.

10. The motor-driven three-wheeled vehicle of one of the preceding claims, **characterized in that** the driver's cabin (45) has a bonnet window (47) which can be slid forward along rails (46) disposed on both sides of the driver's cabin (45), and **in that** the bonnet window (47) can be swung up to the side like a wing-door to allow the driver to get in and out, and **in that** the rear body part (44) has a lockable, pneumatically sprung rear flap (49) with an additional storage surface in the rear which can be folded down towards the back so that the rear flap (49) adjoins the rear end of this additional storage surface when the additional storage surface is folded down and the triangles formed at the sides are made from flexible surfacing material or from solid boards which can be swung out from the boot like door wings.

## Revendications

1. Véhicule motorisé à trois roues et à traction avant pour le fonctionnement sur route, constitué de deux parties (1, 2) pouvant pivoter autour de son axe longitudinal, cependant que sa partie arrière (2) comporte un châssis pour des roues (6) disposées sur deux voies et que la partie avant (1) pouvant pivoter par rapport à cette partie arrière (2) porte le siège (22) du conducteur /de la conductrice et une roue avant dirigée et amortie par une suspension, ***caractérisé en ce que*** la suspension de la roue avant est composée de deux bras triangulaires (13, 14 ; 66, 14) disposés l'un au-dessus de l'autre et pouvant chacun pivoter vers le haut et vers le bas autour d'un axe horizontal, perpendiculaire à l'axe longitudinal du véhicule, cependant que ces bras triangulaires portent sur leur face avant l'axe de direction de la roue avant (7) et qu'au moins un des bras triangulaires (14, 66) s'appuie par l'intermédiaire d'une jambe de suspension à amortisseur (16, 69) au cadre (12) ou au monocoque (52) de la partie avant (1) du véhicule.

2. Véhicule motorisé à trois roues suivant la revendication 1, ***caractérisé en ce que*** le bras triangulaire inférieur (66) forme un bras oscillant unilatéral (66), qui dirige depuis un côté l'axe de direction de la roue avant (7) dans la zone située au-dessous de l'axe de roue (5), cependant que le bras oscillant unilatéral (66) s'appuie avec une jambe de suspension à amortisseur (69) au cadre (12) ou au monocoque (52).

3. Véhicule motorisé à trois roues suivant une des revendications précédentes, ***caractérisé en ce que*** la suspension (11) de la roue avant porte, en plus de la roue avant (7), le moteur (8), la boîte de vitesses (9) pour la transmission, de sorte que l'ensemble composé du moteur (8), de la boîte de vitesses (9) et de la roue avant (7) peut pivoter latéralement autour de l'axe de direction (15) descendant en biais dans le sens de la marche du véhicule, cet axe descendant en biais derrière l'axe (5) de roue avant.

4. Véhicule motorisé à trois roues suivant une des revendications précédentes, ***caractérisé en ce qu***'il présente une carrosserie fermée, qui est composée d'un cadre pouvant pivoter autour de son axe longitudinal et comportant des pièces de carrosserie (44, 52) ou que la carrosserie de la partie avant (1) est réalisée sous forme de cabine autoportante de conducteur(52) en forme de monocoque, cependant que la carrosserie se compose de deux parties (44, 52) pouvant pivoter de manière antagoniste autour de l'axe longitudinal du véhicule, sa partie arrière (44) étant fixée à la partie arrière (2) du cadre et sa partie avant (1, 52) étant réalisée sous forme de cabine de conducteur (45) avec une porte ou ouverture d'entrée et de sortie fermant à clé.

5. Véhicule motorisé à trois roues suivant une des revendications précédentes, ***caractérisé en ce que*** la partie arrière (2) du véhicule se compose d'un cadre (31), comportant deux bras longitudinaux approximativement horizontaux (27, 28) qui s'étendent vers l'arrière et sont destinés aux roues arrière (6), ces dernières s'appuyant chacune par l'intermédiaire d'une jambe de suspension à amortisseurs (29, 30) au haut du cadre (31) de la partie arrière (2) du véhicule.

6. Véhicule motorisé à trois roues suivant une des revendications précédentes, ***caractérisé en ce que*** la cabine (45) du conducteur comporte au moins un siège (22) de voiture et que dans la zone du plancher de la cabine (45) il est disposé une pédale des gaz (20) et une pédale de frein (21) ainsi qu'un guidon 17, dans le genre de celui d'une motocyclette ou d'un scooter.

7. Véhicule motorisé à trois roues suivant une des revendications précédentes, ***caractérisé en ce qu***'il existe un dispositif de stabilisation (32) au moyen duquel les deux parties de véhicule (1, 2) pouvant pivoter l'une par rapport à l'autre peuvent, au-dessous d'une vitesse réglable, pivoter obligatoirement l'une par rapport à l'autre suivant une courbe mathématique caractéristique et qu'elles peuvent être maintenues dans la position de pivotement correspondante.

8. Véhicule motorisé à trois roues suivant la revendication 7, ***caractérisé en ce que*** le dispositif de stabilisation (32) comprend des moyens de commande et une pompe hydraulique (41) ainsi qu'un vérin hydraulique (39) agissant des deux côtés et étant guidé sur une glissière (33), disposée sur la partie avant (1) du véhicule et s'étendant le long de ses radiales de pivotement, cependant que les deux tiges du piston (38) s'articulent par leurs extrémités au cadre (31) de la partie arrière (2) du véhicule et que le vérin hydraulique (39) est raccordé, sur chaque côté du piston (38) à un circuit hydraulique (71, 72), muni chaque fois d'une soupape commandable à une voie (42), de sorte que, suivant la situation de conduite du véhicule, le vérin hydraulique (39) peut être amené et maintenu dans une position de réglage.

9. Véhicule motorisé à trois roues suivant la revendication 8, ***caractérisé en ce* que** les moyens de commande comprennent un dispositif de mesure pour l'accélération transversale sur la partie avant (1) du véhicule et pour l'inclinaison transversale de la partie arrière (2) du véhicule ainsi que pour la vitesse de circulation du véhicule ; **en ce que** ces moyens comprennent aussi une commande à microprocesseur, avec lequel ces valeurs de mesures sont transformables en signaux de sortie pour l'actionnement des soupapes à une voie (42), de sorte que l'accélération transversale sur la partie avant (1) du véhicule peut, dans toutes les situations de conduite, être maintenue au-dessous d'une vitesse réglable par le réglage et le maintien de la position inclinée calculée.

10. Véhicule motorisé à trois roues suivant une des revendications précédentes, ***caractérisé en ce que*** la cabine (45) du conducteur comporte une coupole vitrée (47) pouvant être déplacée vers l'avant sur des glissières (46) disposées des deux côtés de la cabine (45) et que, pour la montée et la descente du conducteur, la coupole vitrée (47) peut s'ouvrir vers le haut par pivotement latéral à la manière d'une porte à battant, et que la partie arrière (44) de la carrosserie présente un hayon (49) amorti par un système hydraulique et fermant à clé, cependant qu'il est disposé dans l'arrière du véhicule une surface de chargement supplémentaire rabattable vers l'arrière, de sorte que, quand la surface de chargement supplémentaire est rabattue, le hayon est jointif avec l'extrémité arrière de cette surface de chargement et que les triangles formés latéralement sont constitués par du tissu de tente souple ou par des plaques rigides pouvant pivoter hors du coffre comme des battants de porte.
